(19) Europäisches Patentamt
European Patent Office
Office européen des brevets

(11) **EP 2 345 708 B1**

(12) **EUROPEAN PATENT SPECIFICATION**

(45) Date of publication and mention
of the grant of the patent:
**22.08.2012 Bulletin 2012/34**

(51) Int Cl.:
*C09J 11/04* *(2006.01)*     *C09J 7/02* *(2006.01)*

(21) Application number: **10192861.2**

(22) Date of filing: **29.11.2010**

(54) **Pressure-sensitive adhesive tape**

Druckempfindliches Klebeband

Bande adhésive sensible à la pression

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **30.11.2009 JP 2009272068**

(43) Date of publication of application:
**20.07.2011 Bulletin 2011/29**

(60) Divisional application:
**12004277.5**

(73) Proprietor: **Nitto Denko Corporation
Ibaraki-shi,
Osaka 567-8680 (JP)**

(72) Inventors:
• **Tsubaki, Hiroyuki
  Ibaraki-shi Osaka 567-8680 (JP)**
• **Inokuchi, Shinji
  Ibaraki-shi Osaka 567-8680 (JP)**

(74) Representative: **Grünecker, Kinkeldey,
Stockmair & Schwanhäusser
Leopoldstrasse 4
80802 München (DE)**

(56) References cited:
**EP-A1- 2 060 611     EP-A1- 2 087 995**

• **DATABASE WPI Week 200613 Thomson
Scientific, London, GB; AN 2006-121321
XP002638811, & JP 2006 022189 A (NITTO DENKO
CORP) 26 January 2006 (2006-01-26)**

**Description**

BACKGROUND OF THE INVENTION

1. Field of the Invention

The present invention relates to a pressure-sensitive adhesive tape.

2. Description of the Related Art

Conventionally, in the applications in which adhesive force and shear strength are required at normal temperature, i.e., in various applications, for example, automobiles, machine parts, electric appliances, and building materials, etc., a pressure-sensitive adhesive tape or sheet (hereinafter, referred to as a "pressure-sensitive adhesive member") has been used for joining members together. Such a pressure-sensitive adhesive member is produced by, for example, curing a pressure-sensitive adhesive composition containing, as its monomer main component, (meth)acrylic acid alkyl ester with ultraviolet rays. In addition, a pressure-sensitive adhesive tape in which fine particles, each of which has a diameter of approximately 20 to 150 $\mu$m and transmits ultraviolet rays through itself, are scattered in the entire pressure-sensitive adhesive layer has been proposed in terms of the reactivity when an ultraviolet reaction is used (for example, see JP—B—S57—17030).

Depending on the member and place to be used in, the aforementioned pressure-sensitive adhesive member is sometimes required to have high shear strength in addition to adhesive force to peel-off.

SUMMARY OF THE INVENTION

The present invention has been made in view of these situations, and an object of the invention is to provide a pressure-sensitive adhesive tape with high adhesion reliability.

Said object was achieved by a pressure-sensitive adhesive tape having a pressure-sensitive adhesive layer containing hollow inorganic fine particles and bubbles, and the pressure-sensitive adhesive tape has a modulus at 100% of 13.0 N/cm$^2$ or more and shear adhesive force of 80 N/cm$^2$ or more and wherein the total surface area of the hollow inorganic fine particles per gram of the pressure-sensitive adhesive layer is within the range of 3.5 x 10$^2$ to 6.0 x 10$^2$ [cm$^2$].

The pressure—sensitive adhesive tape of the present invention, can be used in, for example, adhesion applications in which high shear adhesive force is required, such as automobiles and buildings, etc., and processability and workability can be improved because of a high initial elastic modulus thereof. As a result, high adhesion reliability can be obtained by using such a pressure-sensitive adhesive tape. Also, even when processed into a product form having a relatively large thickness, in particular, in an adhesion application for structural materials, the pressure-sensitive adhesive tape of the present invention contributes to reduction in weight because the hollow inorganic fine particles are adopted therein.

BRIEF DESCRIPTION OF THE DRAWING

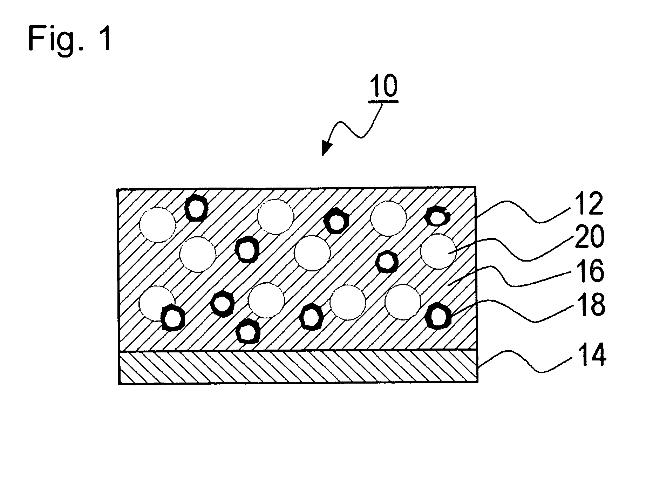

Fig. 1 is a partial sectional view of a pressure-sensitive adhesive tape according to the present invention.

DETAILED DESCRIPTION OF THE INVENTION

The invention will now be described by reference to the preferred embodiments.

Hereinafter, preferred embodiments for carrying out the present invention will be described in detail with reference to the accompanying drawing and table.

Preferred embodiments are set forth in the subclaims.

[Pressure-sensitive Adhesive Member]

In a pressure—sensitive adhesive member according to the present embodiment, materials that are flexible and excellent in durability are used as the main compositions of an adhesive and support member. Accordingly, the pressure-sensitive adhesive member can follow a distortion and deformation of an adherend, occurring with a change in temperature, and exhibit strong adhesive force, high durability, and high heat resistance. The pressure—sensitive adhesive member according to the embodiment is not particularly limited in shape, but may have a sheet shape other than a long and thin shape like a tape. In the following descriptions, a tape-shaped pressure-sensitive adhesive tape, one side of which is only a pressure-sensitive adhesive surface, will be described.

Fig. 1 is a partial sectional view of a pressure-sensitive adhesive tape according to the present embodiment. As illustrated in Fig. 1, a pressure—sensitive adhesive tape 10 comprises: a pressure—sensitive adhesive layer 12 as an adhesive; and a substrate 14 as a support member for supporting the pressure-sensitive adhesive layer 12. The pressure-sensitive adhesive layer 12 includes a pressure-sensitive adhesive composition 16, hollow inorganic fine particles 18 contained in the pressure—sensitive adhesive composition 16, and bubbles 20 formed inside the pressure-sensitive adhesive composition 16.

The pressure-sensitive adhesive tape according to the present embodiment may have a form in which both sides of the pressure-sensitive adhesive tape are pressure-sensitive adhesive surfaces, other than the form illustrated in Fig. 1, in which one side of the pressure-sensitive adhesive tape is only a pressure-sensitive adhesive surface. In the case, the pressure-sensitive adhesive layers of which the pressure-sensitive adhesive surfaces are composed may or may not be the same type on both sides. Such a pressure-sensitive adhesive tape may be a single separator type in which the pressure—sensitive adhesive surface is protected by a separator (release liner) or a double separator type in which the pressure-sensitive adhesive surfaces on both sides are protected by two separators.

Also, the pressure-sensitive adhesive tape may comprise only the pressure-sensitive adhesive layer without the substrate. In this case, it is better that the pressure-sensitive adhesive surfaces are protected by two separators on both sides.

Also, the substrate 14 may consist of the same composition as the pressure-sensitive adhesive composition 16 contained in the pressure-sensitive adhesive layer 12, which may appropriately contain the hollow inorganic fine particles 18 and the bubbles 20. Also, the pressure-sensitive adhesive tape 10 may be formed in a form of being wound in a roll shape, or in a form of sheets being laminated. When the pressure-sensitive adhesive tape 10 is formed in a form of being wound in a roll shape, the formation thereof can be made by, for example, winding the pressure-sensitive adhesive layer 12 in a roll shape in the state where the pressure-sensitive adhesive layer 12 is protected by the separator or the release treatment layer formed on the back side of the substrate.

The pressure-sensitive adhesive tape 10 may have another layer (for example, intermediate layer, subbing layer, etc.) as far as the effects of the present invention are not impaired.

The pressure-sensitive adhesive tape 10 according to the present embodiment has a modulus at 100% of 13.0 $N/cm^2$ or more. It is better that the upper limit of the modulus at 100% is 30 $N/cm^2$ or less, and more preferably 25 $N/cm^2$ or less. In addition, the pressure-sensitive adhesive tape 10 has shear adhesive force of 80 $N/cm^2$ or more. The values of the modulus at 100% and shear adhesive force used in the present embodiment are obtained when only the pressure-sensitive adhesive layer 12 is measured. The method of measuring each value will be described in the later-described examples.

[Pressure-sensitive Adhesive Layer]

(Base Polymer)

The pressure-sensitive adhesive composition 16 contained in the pressure-sensitive adhesive layer 12 includes a base polymer. The base polymers can be used alone or in combination of two or more thereof. As the base polymer, those used in a publicly-known acrylic pressure-sensitive adhesives can be preferably used. An acrylic pressure-sensitive adhesive usually contains, as the base polymer, an acrylic polymer [in particular, an acrylic polymer whose monomer main component is (meth) acrylic acid ester]. In the acrylic polymer, only one type of (meth) acrylic acid ester may be used, or two or more types thereof may be used. As such (meth) acrylic acid ester, (meth) acrylic acid alkyl ester can be used preferably. Examples of (meth)acrylic acid alkyl ester in the acrylic polymer include for example:

(meth)acrylic acid $C_{1-20}$ alkyl esters [preferably (meth)acrylic acid $C_{2-14}$ alkyl esters, more preferably (meth) acrylic acid $C_{2-10}$ alkyl esters], such as (meth) acrylic acid methyl, (meth) acrylic acid ethyl, (meth)acrylic acid propyl, (meth) acrylic acid isopropyl, (meth) acrylic acid butyl, (meth) acrylic acid isobutyl,
(meth)acrylic acid s-butyl, (meth)acrylic acid t-butyl,
(meth)acrylic acid pentyl, (meth)acrylic acid isopentyl,
(meth)acrylic acid hexyl, (meth)acrylic acid heptyl,
(meth)acrylic acid octyl, (meth)acrylic acid 2-ethylhexyl,
(meth)acrylic acid isooctyl, (meth)acrylic acid nonyl,
(meth)acrylic acid isononyl, (meth)acrylic acid decyl,
(meth)acrylic acid isodecyl, (meth)acrylic acid undecyl,
(meth)acrylic acid dodecyl, (meth)acrylic acid tridecyl,
(meth)acrylic acid tetradecyl, (meth)acrylic acid pentadecyl,

(meth)acrylic acid hexadecyl, (meth)acrylic acid heptadecyl,
(meth)acrylic acid octadecyl, (meth) acrylic acid nonadecyl, and
(meth)acrylic acid eicosyl, etc.

Examples of (meth)acrylic acid esters other than (meth)acrylic acid alkyl esters include, for example:

(meth) acrylic acid esters having an alicyclic hydrocarbon group,
such as cyclopentyl (meta) acrylate, cyclohexyl (meta) acrylate,
and isobornyl (meta) acrylate, etc.; and (meth)acrylic acid esters having an aromatic hydrocarbon group, such as
phenyl (meta) acrylate, etc.

Because a (meth)acrylic acid ester is used as the monomer main component of the acrylic polymer, it is preferable that the ratio of the (meth)acrylic acid ester [in particular, (meth) acrylic acid alkyl ester] to the total mass of the monomer components for preparing the acrylic polymer is, for example, 60 mass% or more (preferably 80 mass% or more). Thereby, it is unnecessary to separately perform an adhesion treatment to use as an adhesive, and hence an adhesive can be produced in a relatively simple and easy way, allowing the production efficiency to be improved.

In the aforementioned acrylic polymer, various copolymeric monomers, such as polar group-containing monomer and polyfunctional monomer, may be used as monomer components. By using a copolymeric monomer as a monomer component, for example, the adhesive force to an adherend can be improved or the cohesive force to an adhesive (pressure-sensitive adhesive layer) can be enhanced. Copolymeric monomers can be used alone or in combination of two or more thereof.

Examples of the aforementioned polar group-containing monomers include, for example: carboxyl group-containing monomers, such as (meth)acrylic acid, itaconic acid, maleic acid, fumaric acid, crotonic acid, and isocrotonic acid, or anhydrides thereof (maleic anhydride, etc.); hydroxyl group—containing monomers, such as (meth)acrylic acid hydroxyalkyls including (meth)acrylic acid hydroxyethyl, (meth)acrylic acid hydroxypropyl, and (meth)acrylic acid hydroxybutyl, etc.; amide group-containing monomers, such as acrylamide, methacrylamide, N,N-dimethyl(meth)acrylamide, N-methylol(meth)acrylamide, N-methoxymethyl(meth)acrylamide, and N-butoxymethyl(meth)acrylamide, etc.; amino group-containing monomers, such as (meth) acrylic acid aminoethyl, (meth)acrylic acid dimethylaminoethyl, and (meth)acrylic acid t-butylaminoethyl, etc.; glycidyl group-containing monomers, such as (meth)acrylic acid glycidyl and (meth)acrylic acid methylglycidyl, etc.; cyano group-containing monomers, such as acrylonitrile and methacrylonitrile, etc.; and heterocycle-containing vinyl monomers, such as N-vinylpyridine, N-vinylpiperidone, N-vinylpyrimidine, N-vinylpiperazine, N—vinylpyrazine, N-vinylpyrrole, N-vinylimidazole, and N-vinyloxazole, etc., as well as N-vinyl-2-pyrrolidone and (meth)acryloyl morpholine. As the polar group-containing monomer, carboxyl group-containing monomers, such as acrylic acid, etc., or anhydrides thereof are preferred.

The use amount of the polar group-containing monomer is smaller than or equal to 30 mass% (for example, 1 to 30 mass%) based on the total mass of the monomer components for preparing the acrylic polymer, and is preferably 3 to 20 mass%. If the use amount of the polar group-containing monomer exceeds 30 mass% based on the total mass the monomer components for preparing the acrylic polymer, for example, the cohesive force of the acrylic pressure-sensitive adhesive becomes too high, and accordingly there is the fear that the pressure-sensitive adhesiveness may be deteriorated. On the other hand, if the use amount thereof is too small (for example, below one mass% based on the total mass of the monomer components for preparing the acrylic monomer), for example, the cohesive force of the acrylic pressure-sensitive adhesive is decreased, and accordingly high shear force cannot be obtained. A polyfunctional monomer can also be used to adjust the cohesive force of the acrylic pressure—sensitive adhesive.

Examples of the aforementioned polyfunctional monomers include, for example: hexanediol di(meth)acrylate, (poly)ethylene glycol di(meth)acrylate, (poly)propylene glycol di(meth)acrylate, neopentyl glycol di(meth)acrylate, pentaerythritol di(meth)acrylate, pentaerythritol tri(meth)acrylate, dipentaerythritol hexa(meth)acrylate, trimethylolpropane tri(meth)acrylate, tetramethylol methane tri(meth)acrylate, allyl(meth)acrylate, vinyl(meth)acrylate, divinylbenzene, epoxy acrylate, polyester acrylate, urethane acrylate, butyl di(meth)acrylate, hexyl di(meth)acrylate, etc.

The use amount of the polyfunctional monomer is smaller than or equal to two mass% (for example, 0.01 to 2 mass%) based on the total mass of the monomer components for preparing the acrylic polymer, and is preferably 0.02 to 1 mass%. If the use amount of the polyfunctional monomer exceeds two mass% based on the total mass of the monomer components for preparing the acrylic polymer, for example, the cohesive force of the acrylic pressure—sensitive adhesive becomes too high, and hence there is the fear that the pressure—sensitive adhesiveness may be deteriorated. On the other hand, if the use amount of the polyfunctional monomer is too small (for example, below 0.01% based on the total mass of the monomer components for preparing the acrylic polymer), for example, there is the fear that the cohesive force of the acrylic pressure-sensitive adhesive may be decreased.

Examples of the copolymeric monomers other than the polar group-containing monomers or polyfunctional monomers include: for example: vinyl esters, such as vinyl acetate and vinyl propionate, etc.; aromatic vinyl compounds, such as styrene and vinyl toluene, etc.; olefins or dienes, such as ethylene, butadiene, isoprene and isobutylene, etc. ; vinyl ethers, such as vinyl alkyl ether, etc.; vinyl chloride; (meth)acrylic acid alkoxy alkyl monomers, such as (meth) acrylic acid methoxyethyl, (meth)acrylic acid ethoxyethyl, etc.; sulfonate group-containing monomers, such as vinyl sulfonate sodium, etc.; phosphate group-containing monomers, such as 2-hydroxyethyl acryloyl phosphate, etc.; imide group-containing monomers, such as cyclohexyl maleimide and isopropyl maleimide, etc.; isocyanate group-containing monomers, such as 2-methacryloyloxyethyl isocyanate, etc.; fluorine atom-containing (meth)acrylate; and silicon atom-containing (meth)acrylate, etc.

(Polymerization Initiator)

The aforementioned acrylic polymer can be prepared by a publicly-known or commonly-used polymerization method. Examples of the polymerization method include, for example, a solution polymerization method, emulsion polymerization method, bulk polymerization method, and photopolymerization method, etc. In manufacturing the pressure—sensitive adhesive layer 12 according to the present embodiment, when the acrylic polymer is to be prepared as a base polymer, it is preferable to utilize a curing reaction by heat or an activated energy ray, in which a polymerization initiator, such as a thermal polymerization initiator or photopolymerization initiator (photoinitiator), is used, in terms of workability and obtaining a stable bubble structure. That is, the pressure—sensitive adhesive composition 16 according to the embodiment contains a polymerization initiator, such as a thermal polymerization initiator or photopolymerization initiator, etc.

When containing a polymerization initiator (thermal polymerization initiator or photopolymerization initiator, etc.), as stated above, the pressure—sensitive adhesive composition 16 can be cured by heat or an activated energy ray. Accordingly, because the adhesive component 16 is cured in the state where the hollow inorganic fine particles 18 are mixed, the pressure—sensitive adhesive layer 12 can be easily formed in which the hollow inorganic fine particles 18 are stably contained.

As such a polymerization initiator, a photopolymerization initiator can be preferably used in terms of the advantage that a polymerization period can be shortened, etc. That is, it is preferable that the pressure-sensitive adhesive layer 12 is formed so as to stably contain the hollow inorganic fine particles 18 and bubbles 20 by utilizing polymerization with the use of an activated energy ray. The polymerization initiators can be used alone or in combination of two or more thereof.

Such a photopolymerization initiator is not particularly limited, but, for example, a benzoin ether photopolymerization initiator, acetophenone photopolymerization initiator, $\alpha$-ketol photopolymerization initiator, aromatic sulfonyl chloride photopolymerization initiator, photoactive oxime photopolymerization initiator, benzoin photopolymerization initiator, benzyl photopolymerization initiator, benzophenone photopolymerization initiator, ketal photopolymerization initiator, or thioxanthone photopolymerization initiator, etc., can be used.

Specific examples of the benzoin ether photopolymerization initiator include, for example: benzoin methyl ether, benzoin ethyl ether, benzoin propyl ether, benzoin isopropyl ether, benzoin isobutyl ether, 2,2-dimethoxy-1,2-diphenylethane-1-one, and anisole methyl ether, etc. Specific examples of the acetophenone photopolymerization initiator include, for example: 2,2-diethoxyacetophenone, 2,2-dimethoxy-2-phenylacetophenone, 1-hydroxycyclohexyl phenyl ketone, 4-phenoxy dichloroacetophenone, and 4-t-butyl-dichloroacetophenone, etc. Specific examples of the $\alpha$-ketol photopolymerization initiator include, for example: 2-methyl-2-hydroxy propiophenone and 1- [ 4 - (2-hydroxyethyl) -phenyl] -2-hydroxy-2-methylpropane-1-one, etc. Specific examples of the aromatic sulfonyl chloride photopolymerization initiator include, for example, 2-naphthalene sulfonyl chloride, etc. Specific examples of the photoactive oxime photopolymerization initiator include, for example, 1-phenyl-1,1-propanedione-2- (o-ethoxycarbonyl) -oxime, etc.

Specific examples of the benzoin photopolymerization initiator include, for example, benzoin, etc. Specific examples of the benzyl photopolymerization initiator include, for example, benzyl, etc. Specific examples of the benzophenone photopolymerization initiators include, for example, benzophenone, benzoylbenzoic acid, 3,3'-dimethyl-4-methoxybenzophenone, polyvinyl benzophenone, and $\alpha$-hydroxy cyclohexyl phenyl ketone, etc. Specific examples of the ketal photopolymerization initiator include, for example, benzyl dimethyl ketal, etc. Specific examples of the thioxanthone photopolymerization initiator include, for example, thioxanthone, 2-chlorothioxanthone, 2-methyl thioxanthone, 2,4-dimethyl thioxanthone, isopropyl thioxanthone, 2,4—dichloro thioxanthone, 2,4-diethyl thioxanthone, 2,4-diisopropyl thioxanthone, and dodecyl thioxanthone, etc.

The use amount of the photopolymerization initiator is not limited as far as the acrylic polymer can be formed by photopolymerization, but can be selected from a range of, for example, 0.01 to 5 parts by mass (preferably 0.03 to 3 parts by mass) based on 100 parts by mass of the whole monomer components for forming the base polymer in the pressure-sensitive adhesive composition 16 [in particular, the whole monomer components for forming the acrylic polymer whose monomer main component is (meth)acrylic acid ester].

In activating the photopolymerization initiator, it is important to radiate an activated energy ray to the pressure-sensitive adhesive composition 16. Examples of such an activated energy ray include, for example: ionizing radiations, such as an α-ray, β-ray, γ-ray, neutron ray, and electron beam, etc. ; and an ultraviolet ray, etc., and among them, an ultraviolet ray is particularly preferred. Radiation energy of an activated energy ray and a radiation period thereof, etc., are not particularly limited, and they only have to activate the photopolymerization initiator to generate a reaction of the monomer components. As stated above, by polymerized with an action by the activated energy ray, quick and uniform polymerization can be performed, thereby allowing the production efficiency to be improved.

Examples of the thermal polymerization initiator include, for example: azo polymerization initiators [for example,

2,2'-azobisisobutyronitrile,
2,2'-azobis-2-methylbutyronitrile,
2,2'-azobis(2-methylpropionic acid)dimethyl,
4,4'-azobis-4-cyanovalerianic acid, azobis isovaleronitrile,
2,2'-azobis(2-amidinopropane)dihydrochloride,
2,2'-azobis[2- (5-methyl-2-imidazoline-2-yl)
propane]dihydrochloride,
2,2'-azobis(2-methylpropionamidine)disulfate, and 2,2'-azobis (N,N'-dimethyleneisobutylamidine)dihydrochloride, etc.]; peroxide polymerization initiators (for example, dibenzoyl peroxide, and tert-butyl permaleate, etc.); and redox polymerization initiator, etc. The use amount of the thermal polymerization initiator is not particularly limited, and only has to be within a conventional range in which it can be used as a thermal polymerization initiator.

As stated above, because the pressure-sensitive adhesive layer 12 is stably cured, by various polymerizations, in the state where the hollow inorganic fine particles 18 are scattered, thereby allowing the cohesive force and heat resistance to be improved.

(Hollow Inorganic Fine Particles)

As a result of intensive study by the present inventors, it has been made clear that the total of the surface areas of the hollow inorganic fine particles 18 contained in the pressure-sensitive adhesive layer 12 according to the present embodiment is better when within a range of $3.5 \times 10^2$ to $6.0 \times 10^2$ [cm$^2$] per gram of the pressure-sensitive adhesive layer (adhesive) . The pressure-sensitive adhesive tape 10 provided with such a pressure-sensitive adhesive layer 12 and the pressure-sensitive adhesive layer 12 without a substrate have high shear strength without impairing the normal adhesive force.

A method of containing the hollow inorganic fine particles 18 into the pressure-sensitive adhesive composition 16 is not particularly limited, but a method can be cited in which, for example, after the pressure-sensitive adhesive composition 16 of which the pressure-sensitive adhesive layer 12 consist has been formed, the hollow inorganic fine particles 18 are combined and mixed into the pressure-sensitive adhesive composition 16. Alternatively, as another method, a method can be cited in which the hollow inorganic fine particles 18 are combined and mixed into a mixture of acrylic monomers of which the acrylic polymer is formed or into a partial polymer in which part of the acrylic monomers has been polymerized. Of these methods, the latter method is preferred in terms of the workability.

Examples of the fine particles contained in the pressure-sensitive adhesive layer 12 according to the present embodiment include, for example: carbide particles, such as silicon carbide, boron carbide, and carbon nitride, etc. ; nitride particles, such as aluminum nitride, silicon nitride, and boron nitride, etc.; ceramic particles represented by oxides, such as alumina and zirconium; and inorganic fine particles, such as calcium carbide, aluminum hydroxide, glass, silica, and hydrophobic silica, etc. In particular, examples of the hollow inorganic fine particles 18 include: hollow balloons made of glass, such as hollow glass balloons, etc.; hollow balloons made of compounds, such as hollow aluminum balloons; and hollow ceramic balloons, etc.

Among these fine particles, it is preferable to use hollow inorganic fine particles in terms of the efficiency in the polymerization when an ultraviolet reaction is used, and the weight of the fine particles. It is more preferable to use the hollow glass balloons, because the adhesive force at high temperature can be improved without impairing the strength and properties necessary for the pressure-sensitive adhesive layers 12, such as the shear strength and holding force, etc. Also, when compared to the fine particles made of an inorganic salt, the influence on the adhesion properties, occurring due to alkaline elution, etc., can be reduced. Also, deterioration of the processability in each manufacturing process can be reduced because the inorganic fine particles are hollow glass balloons.

The average particle size of the hollow inorganic fine particles 18 is not particularly limited, but may be selected in accordance with a desired property required for the pressure-sensitive adhesive layer 12. For example, the average particle size of the hollow inorganic fine particles 18 may be within a range of 1 to 500 μm, preferably within a range of 5 to 200 μm, more preferably 20 to 80 μm, and still more preferably 30 to 50 μm. Thereby, the surface area of the hollow inorganic fine particles 18 per unit mass of the pressure-sensitive adhesive layer 12 can be made large without impairing the properties of the pressure-sensitive adhesive layer 12, such as the shear strength and holding force.

The average particle size of the hollow inorganic fine particles 18 is measured in the following way: a particle size distribution is first measured with a Coulter particle size measuring apparatus (laser diffractometry); and an average particle size is then calculated from the measured volume frequency distribution.

The specific gravity of the hollow inorganic fine particles 18 is not particularly limited, but may be selected in accordance with a desired property required for the pressure-sensitive adhesive layer 12. For example, the specific gravity thereof may be within a range of 0.1 to 0.8 g/cm$^3$, and preferably within a range of 0.15 to 0.50 g/cm$^3$. Thereby, the surface area of the hollow inorganic fine particles 18 per unit mass of the pressure-sensitive adhesive layer 12 can be made large without impairing the properties of the pressure-sensitive adhesive layer 12, such as the shear strength and the holding force. When the specific gravity thereof is larger than 0.1 g/cm3, and more preferably larger than 0.15 g/cm$^3$, floating of the hollow inorganic fine particles 18 can be reduced when the hollow inorganic fine particles 18 is combined and mixed into a mixture of the acrylic monomers or into a partial polymer in which part of the acrylic monomer has been polymerized. Accordingly, the hollow inorganic fine particles 18 can be uniformly scattered in the pressure-sensitive adhesive layer 12. Further, because the specific gravity thereof is greater than or equal to the aforementioned lower limit, the glass strength is secured to some extent, thereby reducing cracking of the hollow inorganic fine particles 18 themselves.

On the other hand, when the specific gravity of the hollow inorganic fine particles 18 is smaller than 0.8 g/cm3, and more preferably smaller than 0.50 g/cm$^3$, the transmission rate of an ultraviolet ray is secured to some extent, and hence a decrease in the efficiency of an ultraviolet reaction can be reduced. Further, because a cheaper material can be used, the production cost can be reduced to a lower level. Still further, an increase in the weight of the pressure-sensitive adhesive layer 12 in which the hollow inorganic fine particles 18 are scattered is reduced, the workability can be improved while the pressure-sensitive adhesive layer 12 is being manufactured or used, thereby also contributing to a reduction in weight of the apparatus using the pressure-sensitive adhesive tape.

The specific gravity of the hollow inorganic fine particles 18 is measured in the following way: the true specific gravity thereof is first measured by a gas-phase substitution method using a Penta Pycnometer in which a gas is enclosed as a substitution medium so that the volume of a sample is calculated from the gas equation; and the specific gravity δ is then calculated from the calculated volume value a and the mass value b measured with electronic scales, as shown in the following equation (1):

$$\text{Specific Gravity } \delta = b[g]/a[cm^3] \qquad \text{Equation (1).}$$

The surface of the hollow inorganic fine particles 18 may be subjected to various surface treatments (for example, low surface tension treatment by silicone compound or fluorine compound, etc.).

It is better that the use amount of the hollow inorganic fine particles 18 is one part by mass or more based on 100 parts by mass of the whole monomer components for forming an acrylic polymer that is the base polymer of the pressure-sensitive adhesive composition 16, and preferably five parts by mass or more. By scattering the hollow inorganic fine particles 18 into the pressure-sensitive adhesive composition 16 at a ratio greater than or equal to the aforementioned range, the total of the surface areas of the contained hollow inorganic fine particles 18 can be increased and it becomes easy to finely scatter the bubbles.

On the other hand, it is better that the use amount of the hollow inorganic fine particles 18 is fifteen parts by mass or less based on 100 parts by mass of the whole monomer components for forming the acrylic polymer, preferably thirteen parts by mass or less, and still preferably ten parts by mass or less. By scattering the hollow inorganic fine particles 18 into the pressure-sensitive adhesive composition 16 at a ratio smaller than or equal to the aforementioned range, the concavities and convexities created between the pressure-sensitive adhesive layer 12 and the adherend are decreased when the pressure-sensitive adhesive layer 12 is used in the pressure-sensitive adhesive tape 10, thereby reducing a decrease in the adhesive force, occurring due to a decrease in the adhesion area.

Examples of the hollow glass balloons used as the hollow inorganic fine particles 18 include "Fuji Balloon H-35" and "Fuji Balloon H-40" (both are made by FUJI SILYSIA CHEMICAL LTD.), etc.

In the pressure-sensitive adhesive layer 12 or the pressure-sensitive adhesive tape 10 provided with the pressure-sensitive adhesive layer 12 according to the present embodiment, the total of the surface areas of the hollow glass balloons is made to be within a range of 3.5 x 10$^2$ to 6.0 x 10$^2$ [CM$^2$] per gram of the pressure-sensitive adhesive layer 12 by mixing the aforementioned hollow glass balloons alone or in combination of two or more thereof. Thereby, the shear adhesive force can be improved without impairing other properties such as the adhesive force and holding force, etc.

A method of calculating the total surface area S1 of the hollow inorganic fine particles 18 per gram of the pressure-sensitive adhesive layer (adhesive) is shown as follows: assuming that the average particle size of the hollow inorganic fine particles 18 is 2r [cm], the specific gravity thereof is δ [g/cm$^3$], the combination parts to be added is δ, and the total of the combination parts of monomers and various agents to be mixed is β, the mass per particle of the hollow inorganic fine particles m = 4/3 x $\pi$ x $r^3$ x $\beta$ [g]; the number of the particles contained per gram of the hollow inorganic fine particles N = 1/m; the surface area per particle of the hollow inorganic fine particles s = 4 x $\pi$ x $r^2$ [cm$^2$] ; the total surface area of the particles contained per gram of the hollow inorganic fine particles $S_0$ = N x s [cm$^2$] ; the mass of the hollow inorganic fine particles contained per gram of the pressure-sensitive adhesive layer (adhesive) M = $\delta/\beta$ [g]; and the total surface area per gram of the pressure-sensitive adhesive layer (adhesive) $S_1$ [cm$^2$] = $S_0$ x M = (3 x $\alpha$) / ($\beta$ x r x $\delta$)

(Bubbles)

The pressure-sensitive adhesive layer 12 according to the present embodiment appropriately contains the bubbles 20. The amount of the bubbles 20 able to be mixed into the pressure-sensitive adhesive layer 12 is not particularly limited, but is appropriately selected in accordance with a use application. It is better that the bubbles 20 according to the embodiment is contained in an amount within a range of 5 to 40% by volume based on the whole volume of the pressure-sensitive adhesive layer 12, and preferably within a range of 8 to 30% by volume. When the bubbles 20 are contained in an amount greater than or equal to 5% by volume, the pressure-sensitive adhesive layer 12 can exhibit the aforementioned properties more surely. Further, by making the amount of the contained bubbles 20 smaller than or equal to 40% by volume based on the whole volume of the pressure-sensitive adhesive layer 12, the presence of the bubbles penetrating through the pressure-sensitive adhesive layer 12 from the front surface to the back surface thereof is reduced, and thereby reducing the deterioration of the adhesive performance and appearance of the pressure-sensitive adhesive layer 12.

It is desirable that the bubbles 20 mixed in the pressure-sensitive adhesive layer 12 are basically closed-cell type bubbles, but closed-cell type bubbles and interconnected-cell type bubbles may coexist.

Also, the bubbles 20 usually have a spherical shape (in particular, a true spherical shape) , but may have a distorted spherical shape. The average bubble size of the bubbles 20 is not particularly limited, but is selected from a range of, for example, 1 to 1000 $\mu$m (preferably 10 to 500 $\mu$m, and more preferably 30 to 300 $\mu$m). The average bubble size (diameter) of the bubbles can be measured from an image of the cross section of a tape sample, the image being obtained with an electron microscope, etc.

A gas component contained in the bubble (gas component of which the bubble is formed; sometimes referred to as a "bubble-forming gas") is not particularly limited, but various gas components, such as inactive gases including nitrogen, carbon dioxide, and argon, etc., and air, etc. When a bubble-forming gas is mixed with the pressure-sensitive adhesive composition 16 and then a polymerization reaction, etc. is initiated, it is preferable that the bubble-forming gas does not hamper the reaction. Nitrogen is preferred as a bubble-forming gas in terms of not hampering a reaction and cost.

(Surfactant)

The pressure-sensitive adhesive layer 12 and the pressure-sensitive adhesive composition 16 of which the pressure-sensitive adhesive layer 12 consists may appropriately include various additives in accordance with the application of the pressure-sensitive adhesive tape 10 containing them. For example, a surfactant is appropriately added in the pressure-sensitive adhesive layer 12 and the pressure-sensitive adhesive composition 16 according to the present embodiment, in terms of: the adhesiveness between the hollow inorganic fine particles 18 and the base polymer; reduction in the frictional resistance; and the mixability and stability of the bubbles.

Examples of such a surfactant include, for example: an ionic surfactant, hydrocarbon surfactant, silicon surfactant, and fluorochemical surfactant, etc. Among them, a fluorochemical surfactant is preferred, and in particular, the fluorochemical surfactant having an oxy $C_{2\text{-}3}$ alkylene group and a fluorinated hydrocarbon group in its molecule is preferred. The fluorochemical surfactant may be used alone or in combination of two or more thereof. As such a fluorochemical surfactant, for example, a surfactant with a product name of "Surflon S-393" (made by AGC SEIMI CHEMICAL CO., LTD) is preferred.

A use amount (solid content) of a fluorochemical surfactant is not particularly limited, but can be selected from, for example, a range of 0.01 to 2 parts by mass (preferably 0.03 to 1.5 parts by mass, and more preferably 0.05 to 1 parts by mass) based on 100 parts by mass of the whole monomer components for forming the base polymer in the pressure-sensitive adhesive composition 16 [in particular, the whole monomer components for forming an acrylic polymer whose monomer main component is (meth) acrylic acid ester] . If the use amount of a fluorochemical surfactant is below 0.01 parts by mass based on 100 parts by mass of the base polymer in the pressure-sensitive adhesive composition 16 containing the bubbles 20, the mixability of the bubbles 20 is decreased and it becomes difficult to mix a sufficient amount of the bubbles 20 into the pressure-sensitive adhesive composition 16. On the other hand, if the use amount of a fluorochemical surfactant exceeds 2 parts by mass based on 100 parts by mass of the base polymer containing the bubbles 20, the adhesive performance is deteriorated.

In the present embodiment, it is preferable that the bubbles 20 are combined and mixed into the pressure-sensitive adhesive composition 16 as the final component to be combined, in order for the bubbles 20 to be stably mixed into and present in the pressure-sensitive adhesive layer 12. In particular, the viscosity of the pressure-sensitive adhesive composition 16 prior to the mixture of the bubbles 20 is not particularly limited, as far as the mixed bubbles 20 are stably held, but a viscosity of 5 to 50 Pa·s (preferably 10 to 40 Pa·s) is preferred, the viscosity being measured by using a BH viscometer as a viscometer and at the conditions where a rotor is a No. 5 rotor, the number of rotations is 10 rpm, and measuring temperature is 30°C. If the viscosity (BH viscometer, No. 5 rotor, 10 rpm, 30°C) of the pressure-sensitive adhesive composition 16 into which the bubbles 20 are mixed is below 5 Pa·s, the mixed bubbles are instantly integrated together and sometimes released outside the system, because the viscosity is too low. On the other hand, if the viscosity exceeds 50 Pa·s, it becomes difficult to form the pressure-sensitive adhesive layer 12 containing the bubbles 20.

The viscosity of the acrylic monomer mixture prior to mixing the bubbles can be adjusted by, for example: a method of combining various polymer components, such as acrylic rubber, and thickening additive, etc.; and a method of partially polymerizing a monomer component for forming the base polymer [for example, a monomer component for forming an acrylic polymer, such as (meth)acrylic acid ester, etc.], etc.

Specifically, a monomer mixture is prepared by mixing, for example, a monomer component for forming the base polymer [for example, a monomer component for forming an acrylic polymer, such as (meth) acrylic acid ester, etc.] and a polymerization initiator (for example, a photopolymerization initiator, etc.). And then, the monomer mixture is subjected to a polymerization reaction in accordance with the type of the polymerization initiator, so that a composition (syrup) is prepared in which part of the monomer component is only polymerized. Thereafter, a fluorochemical surfactant and the hollow inorganic fine particles 18, and various additives if necessary, are combined into the syrup. Thereby, a precursor of the pressure-sensitive adhesive composition 16 having a proper viscosity with which bubbles can be stably contained, can be prepared. By introducing and mixing bubbles into the precursor of the pressure-sensitive adhesive composition 16, the pressure-sensitive adhesive layer 12 can be obtained in which the bubbles 20 are uniformly scattered.

A method of mixing bubbles is not particularly limited, but a publicly-known bubble mixing method can be used. For example, an example of such an apparatus is provided with: a stator having many fine teeth placed on a disk with a through-hole at its center; and a rotor having teeth as fine as those of the stator, which is placed on the disk to face the stator. The pressure-sensitive adhesive composition 16 containing bubbles is introduced between the teeth on the stator and that on the rotor in the apparatus, and while rotating the rotor at high speed, a gas component for forming bubbles (bubble-forming gas) is introduced into the precursor of the pressure-sensitive adhesive composition 16 through the through-hole. Thereby, the pressure-sensitive adhesive composition 16 can be obtained in which the bubbles are finely scattered and mixed.

In order to reduce or prevent the integration of the bubbles, it is preferable that the processes from the mixture of the bubbles to the formation of the pressure-sensitive adhesive layer 12 containing the bubbles are continuously performed as a series of processes. That is, the pressure-sensitive adhesive layer 12 is obtained as follows: the pressure-sensitive adhesive composition 16 containing bubbles is first prepared by mixing the bubbles as stated above; and subsequently the pressure-sensitive adhesive layer 12 is obtained by using the pressure-sensitive adhesive composition 16 containing the bubbles with a publicly-known formation method. Specifically, the pressure-sensitive adhesive layer 12 is formed by, for example, coating the pressure-sensitive adhesive composition 16 containing the bubbles on a predetermined surface, and then by drying or curing the pressure-sensitive adhesive composition 16 if necessary. In forming the pressure-sensitive adhesive layer 12 containing the bubbles 20, it is preferable to cure the pressure-sensitive adhesive composition 16 by radiating a heat ray or an activated energy ray as stated above.

In the pressure-sensitive adhesive composition 16 containing the aforementioned bubbles, it is difficult to cause the integration of the bubbles and a sufficient amount of the bubbles are stably held therein, and hence the pressure-sensitive adhesive composition 16 can be preferably used as a material for forming the pressure-sensitive adhesive layer 12 in the pressure-sensitive adhesive tape 10 by appropriately selecting a base polymer and an additive of which the pressure-sensitive adhesive composition 16 consists. Also, the pressure-sensitive adhesive composition 16 containing the aforementioned bubbles can be preferably used as a material for forming the substrate 14 (in particular, the substrate containing bubbles to be used in a pressure-sensitive adhesive member) by appropriately selecting a base polymer and an additive of which the pressure-sensitive adhesive composition 16 consists.

(Other Additives)

The pressure-sensitive adhesive layer 12 according to the present embodiment may contain an appropriate additive other than a base polymer, polymerization initiator, hollow inorganic fine particles, and surfactant, in accordance with an application of the pressure-sensitive adhesive layer 12. For example, when the pressure-sensitive adhesive layer 12 is used in the pressure-sensitive adhesive tape 10, appropriate additives, such as cross-linking agent (for example, polyisocyanate cross-linking agent, silicone cross-linking agent, epoxy cross-linking agent, and alkyl-etherified melamine cross-linking agent, etc.), tackifier (solid, semisolid, and liquid tackifier at normal temperature consisting of, for example, rosin derivative resin, polyterpene resin, petroleum resin, and oil soluble phenol resin, etc.), plasticizer, filler other than the aforementioned hollow inorganic fine particle, anti-aging agent, antioxidant, and colorant (pigment and dye, etc.), etc., may be contained in the pressure-sensitive adhesive layer 12.

For example, when forming the pressure-sensitive adhesive layer 12 using a photopolymerization initiator, a pigment (color pigment) for coloring the pressure-sensitive adhesive layer 12 can be used in an amount that does not hamper a photopolymerization. When black is desired as the color of the pressure-sensitive adhesive layer 12, for example, carbon black can be used. The use amount of carbon black is preferably smaller than or equal to, for example, 0.15 parts by mass (for example, 0.001 to 0.15 parts by mass) based on 100 parts by mass of the whole monomer components for forming the base polymer in the pressure-sensitive adhesive composition 16 [in particular, the whole monomers for forming an acrylic polymer whose monomer main component is (meth) acrylic acid ester], and is more preferably selected from a range of 0.01 to 0.1 parts by mass, in terms of a coloring degree and not hampering a photopolymerization reaction.

The aforementioned pressure-sensitive adhesive layer 12 may have either form of a single layer and laminated layers. The thickness of the pressure-sensitive adhesive layer 12 is not particularly limited, but can be selected from a range of, for example, 200 to 5000 $\mu$m (preferably 300 to 4000 $\mu$m, and more preferably 400 to 3000 $\mu$m). If the thickness thereof is smaller than 200 $\mu$m, the cushion performance is deteriorated, thereby deteriorating the adhesiveness to a curved surface and a concave-convex surface. On the other hand, if the thickness thereof is larger than 5000 $\mu$m, it becomes difficult to obtain a layer with a uniform thickness.

[Substrate]

The substrate 14 to be used in the pressure-sensitive adhesive tape 10 according to the present embodiment is not particularly limited, but can be composed of an appropriate thin-walled body. Examples of such a thin-walled body include, for example: paper substrates, such as paper, etc.; fiber substrates (the materials of which are not particularly limited, but can be appropriately selected from the group of, for example, Manila hemp, rayon, polyester, and pulp fiber, etc.), such as cloth, nonwoven fabric, and net, etc.; metal substrates, such as metallic foil and metal plate, etc.; plastic substrates, such as plastic film and sheet, etc.; rubber substrates, such as rubber sheet, etc.; foams, such as foam sheet, etc.; and laminated bodies thereof (in particular, laminated bodies formed of plastic substrates and other substrates and those formed of both plastic films (or sheets)), etc.

Examples of the materials of the plastic films and sheets include, for example: olefin resins whose monomer component is an $\alpha$-olefin, such as polyethylene (PE), polypropylene (PP), ethylene-propylene copolymer, and ethylene-vinyl acetate copolymer (EVA), etc; polyester resins, such as polyethylene terephthalate (PET), polyethylene naphthalate (PEN), polybutylene terephthalate (PBT), etc.; polyvinyl chloride (PVC); vinyl acetate resin; polyphenylene sulfide (PPS); polyamide (nylon); amide resins, such wholly aromatic polyamide (aramid), etc.; polyimide resin; and polyether ether ketone (PEEK), etc. These materials can be used alone or in combination of two or more thereof.

When a plastic substrate is used as a substrate, the deformation performance thereof, such as an elongation percentage, may be controlled by a stretching treatment, etc. Also, when the pressure-sensitive adhesive layer 12 is formed by being cured with an activated energy ray, it is preferable to use the substrate by which the transmission of the activated energy ray is not hampered.

In order to enhance the adhesiveness with the pressure-sensitive adhesive layer 12, the surface of a substrate may be subjected to a commonly-used surface treatment, such as a chemical or physical oxidation treatment, etc., for example, corona treatment, chromic acid treatment, ozone exposure, flame exposure, high-voltage electrical-shock exposure, and ionizing radiation treatment, etc., or to a coating treatment with the use of an undercoat or parting agent.

The thickness of the substrate may be appropriately selected in accordance with the strength, flexibility, and a purpose of use. The thickness thereof is usually smaller than or equal to 1000 $\mu$m (for example, 1 to 1000 $\mu$m), preferably 1 to 500 $\mu$m, and more preferably approximately 3 to 300 $\mu$m, but is not limited thereto. In addition, the substrate may have either form of a single layer and laminated layers.

When pressure-sensitive adhesive is to be contained in a substrate, the substrate can be formed by using a publicly-known pressure-sensitive adhesive (for example, acrylic pressure-sensitive adhesive, rubber pressure-sensitive adhesive, vinyl alkyl ether pressure-sensitive adhesive, silicon pressure-sensitive adhesive, polyester pressure-sensitive adhesive, polyamide pressure-sensitive adhesive, urethane pressure-sensitive adhesive, fluorine pressure-sensitive adhesive, or epoxy pressure-sensitive adhesive, etc), and by using a publicly-known formation method. In addition, the thickness of the pressure-sensitive adhesives is not particularly limited, but can be appropriately selected in accordance with the purpose and the way in which the pressure-sensitive adhesives is used, etc.

[Separator]

In the present embodiment, a separator (release liner) may be used to protect the adhesive surface of the pressure-sensitive adhesive layer 12 or the pressure-sensitive adhesive tape 10. Alternatively, a separator may not always be used. The separator is peeled off when the adhesive surface protected by the separator is to be used (that is, when an adherend is to be attached to the pressure-sensitive adhesive layer 12 protected by the separator) .

A commonly-used release paper can be used as such a separator. Specific examples of the separator include, for example: low adhesive substrates consisting of a fluorine polymer (for example, polytetrafluoroethylene, polychlorotrifluoroethylene, polyvinyl fluoride, polyvinylidene fluoride, tetrafluoroethylene-hexafluoropropylene copolymer, chlorofluoroethylene-vinylidene fluoride copolymer etc.); and low adhesive substrates consisting of a non-polar polymer (for example, olefin resins, such as polyethylene and polypropylene, etc.), etc., as well as the substrates each having a release treatment layer treated by a release treatment agent on at least one surface thereof. In addition, the separator can also be used as a substrate for supporting the pressure-sensitive adhesive layer 12.

As a separator, for example, the separator in which a release treatment layer is formed on at least one surface of the substrate for supporting a release liner can be preferably used. Examples of such a substrate for supporting a release liner include: plastic substrate films (synthetic resin films), such as polyester film (polyethylene terephthalate film, etc.), olefin resin film (polyethylene film or polypropylene film, etc.), polyvinylchloride film, polyimide film, polyamide film (nylon film), and rayon film, etc.; papers (high-quality paper, Japanese paper, craft paper, glassine paper, synthetic paper, top coat paper, etc.); and multilayered substrates formed by laminating or co-extruding these (complex with 2 to 3 layers), etc.

On the other hand, the release treatment agent of which the release treatment layer consists is not particularly limited, but, for example, a silicone release treatment agent, fluorine release treatment agent, and long-chain alkyl release treatment agent, etc., can be used. The release treatment agents can be used alone or in combination of two or more thereof. In addition, the thickness of the separator and a formation method thereof, etc., are not particularly limited.

[Acrylic Pressure-sensitive Adhesive Member]

Of the pressure-sensitive adhesive members according to the present embodiment, the pressure-sensitive adhesive member containing an acrylic polymer in its pressure-sensitive adhesive composition or substrate is excellent in the initial adhesiveness at low temperature (for example, at temperature within a range of approximately -20 to 5°C). Also, the pressure-sensitive adhesive member containing bubbles in its pressure-sensitive adhesive layer or substrate exhibits high resistance to resilience by improving the stress relaxation property. Also, because the pressure-sensitive adhesive member can easily follow a curved surface, a concave-convex surface, and a bend of an adherend, an area enough for adhesion can be secured. Also, because the pressure-sensitive adhesive member is excellent in the stress dispersibility, high shear force can be obtained. In particular, because the pressure-sensitive adhesive member according to the embodiment has the pressure-sensitive adhesive layer 12 moderately containing the hollow inorganic fine particles, excellent adhesive force at normal temperature and shear adhesive force can be obtained.

Also, the acrylic pressure-sensitive adhesive member is excellent in the initial adhesiveness to the adherends that hardly adhere to others, such as: coating films (for example, acid-rain resistant coating film and automotive coating film, etc.); metal plates, such as painted plate, resin plate, and steel plate, etc.; and coated plates (for example, a coating film, such as the aforementioned acid-rain resistant coating film or automotive coating film, etc., is coated on the surface of a metal plate, such as the aforementioned resin plate or steel plate, etc.), etc. In particular, the acrylic pressure-sensitive adhesive member is excellent in the initial adhesiveness to an automotive coated steel sheet, such as automobile body, etc.

A coating film that is an adherend is not particularly limited, and examples thereof include various coating films including, for example, polyester melamine coating film, alkyd melamine coating film, acrylic melamine coating film, acrylic urethane coating film, and acrylic-polyacid curing agent, etc.

Also, the shape of the adherend that hardly adheres to others, for which the acrylic pressure-sensitive adhesive member according to the present embodiment is used, is not particularly limited. For example, the adherend that hardly adheres to others may be an adherend having a shape, such as planar shape or three-dimensional curved shape, etc., or an adherend produced by performing a coating treatment on a molded article having a shape, such as planar shape or three-dimensional curved shape, etc.

Such an acrylic pressure-sensitive adhesive member is used in a way of being attached to an automotive coated steel sheet to protect the coated film or to provide decoration. Also, the acrylic pressure-sensitive adhesive member can be used to join or fix an article with an automotive coated plate therethrough. Examples of the aforementioned article include, for example, automotive exterior parts (in particular, flexible rubber hollow members, such as weather-strip, etc.), body-protecting parts, and decorative parts, etc.

[Outline of Manufacturing Method]

The pressure-sensitive adhesive composition 16 according to the present embodiment is coated on a predetermined surface and is cured by photopolymerization through radiation of an ultraviolet ray to form the pressure-sensitive adhesive layer 12. The pressure-sensitive adhesive layer 12 itself has pressure-sensitive adhesiveness so as to become a sticky pressure-sensitive adhesive layer. The pressure-sensitive adhesive composition 16 may be coated directly on an adherend or may be cured after once coated on a release paper. Also, the pressure-sensitive adhesive member 12 formed on a release paper can be transferred onto an adherend. In addition, the amount of ultraviolet rays to be radiated during the photopolymerization is within a range of approximately 200 to 3000 mJ/cm$^2$. In the case, the thickness of the pressure-sensitive adhesive composition 16 may be any as far as it is larger than or equal to the particle size of the hollow inorganic fine particle 18, but it is preferable that the thickness is within a range of approximately 100 to 3000 $\mu$m.

When coating the pressure-sensitive adhesive composition 16 on the substrate 14, etc., it is preferable to increase the viscosity of the pressure-sensitive adhesive composition 16 in order to smoothly perform the work. An increase in the viscosity thereof can be adjusted by, for example: a method of combining various polymer components, such as acrylic rubber, and thickening additive, etc.; and a method of partially polymerizing a monomer component for forming the base polymer [for example, a monomer component for forming an acrylic polymer, such as (meth)acrylic acid ester, etc.], etc.

Examples

Hereinafter, the present invention will be described in detail based on Examples, but the invention should not be limited at all by these Examples.

(Example 1)

After 0.05 parts by mass of a photopolymerization initiator with a product name of "IRGACURE 651" (made by Ciba Speciality Chemicals Inc.) and 0.05 parts by mass of that with a product name of "IRGACURE 184" (made by Ciba Speciality Chemicals Inc.) were combined into a monomer mixture in which 90 parts by mass of 2-ethylhexyl acrylate and 10 parts by mass of acrylic acid were mixed as monomer components, ultraviolet rays (UV) were radiated until the viscosity (BH viscometer, No. 5 rotor, 10 rpm, measurement temperature: 30°C) became approximately 15 Pa•s to produce a partially polymerized composition (syrup, hereinafter, sometimes referred to as a "partially polymerized monomer syrup").

After 0.08 parts by mass of 1, 6-hexanediol diacrylate (HDDA) were added in 100 parts by mass of the partially polymerized monomer syrup, hollow glass balloons (average particle size of 40 $\mu$m, product name of "Fuji Balloon H-40" (made by FUJI SILYSIA CHEMICAL LTD.) were added in an amount of 12.5 parts by mass based on 100 parts by mass of the partially polymerized monomer syrup.

In the partially polymerized monomer syrup into which the hollow glass balloons had been added, 0.7 parts by mass of a fluorochemical surfactant (product name of "Surflon S-393" (made by AGC SEIMI CHEMICAL CO., LTD) to obtain a pressure-sensitive adhesive composition containing the hollow inorganic fine particles. Thereafter, the pressure-sensitive adhesive composition was stirred using a bubble mixer provided with the aforementioned stator and rotor, which are provided with fine teeth, together with the nitrogen gas introduced from the through-hole of the mixer, so that a pressure-sensitive adhesive composition was obtained in which bubbles were scattered and mixed. The content of the bubbles was approximately 20% by volume based on the whole volume of the pressure-sensitive adhesive composition or the pressure-sensitive adhesive layer.

The pressure-sensitive adhesive composition containing the bubbles was coated on the release treatment surface of a separator. A polyethylene terephthalate substrate whose one surface is subjected to a release treatment (product name of "MRF" made by Mitsubishi Polyester Film, Inc., or "MRN" made by Mitsubishi Polyester Film, Inc.) was used as the separator.

The pressure-sensitive adhesive composition coated on the separator was irradiated from both sides thereof for three minutes by using UV with an illumination intensity of 5 mW/Cm$^2$ ("Black Light" made by TOSHIBA CORPORATION) [measured with a UV checker (product name of "UVR-T1" made by TOPCON CORPORATION) and at the maximum sensitivity of 350 nm], so that the pressure-sensitive adhesive composition was cured to obtain a pressure-sensitive adhesive layer having a thickness of 800 $\mu$m. At the time, 0.04 parts by mass of a photopolymerization initiator with a product name of "IRGACURE 651" (made by Ciba Speciality Chemicals Inc.) was added. Also, an antioxidant (product name of "IRGANOX 1010" (Ciba Speciality Chemicals Inc.) : 0.5 parts by mass), a pigment (product name of "AT DN101" (Dainichiseika Color **&** Chemicals Mfg. Co., Ltd.): 0.02 parts by mass), and a solvent for dispersing pigment (2-ethylhexyl acrylate: 0.18 parts by mass) were added as other additive components.

(Example 2)

Instead of the hollow glass balloons with a product name of "Fuji Balloon H-40" that were added in Example 1, hollow glass balloons with a product name of "Fuji Balloon H-35" (made by FUJI SILYSIA CHEMICAL LTD.) were added in an amount of 12.5 parts by mass based on 100 parts by mass of the partially polymerized monomer syrup.

Other combinations and manufacturing method are the same as those in Example 1.

(Comparative Example)

Instead of the hollow glass balloons with a product name of "Fuji Balloon H-40" that were added in Example 1, hollow glass balloons with a product name of "CELL STAR Z-27" (made by Tokai Kogyo Co. , Ltd.) were added in an amount of 9. 5 parts by mass based on 100 parts by mass of the partially polymerized monomer syrup. Other combinations and manufacturing methods are the same as those in Example 1.

The combination amounts of each material and the physical properties of the added glass balloons in Example 1, Example 2, and Comparative Example are shown in detail in Table 1.

[Evaluation]

(Modulus at 100% and Tensile Strength)

The pressure-sensitive adhesive layers formed in Example 1, Example 2, and Comparative Example were evaluated according to JISK 6251. Specifically, evaluation samples were produced by punching out the films of the pressure-sensitive adhesive layers into the shapes of dumbbell-shaped specimens No. 3. Tension tests were performed by using a universal testing machine (made by Minebea Co. , Ltd., "TG-1kNB") under the condition that the initial strength (measuring length) was 20 mm, the specimen width was 5 mm, and tension speed was 500 mm/min, so that tension strength $[N/cm^2]$ and elongation percentage [%] were measured.

The tests were performed three times for each specimen and the average thereof was made to be each measured value. Also, a modulus at 100% was read from the stress-strain curve. The results of the measured values of Examples and Comparative Example are shown in Table 1.

[Table 1] **Table 1**

|  | Example 1 | Example 2 | Comparative Example |
|---|---|---|---|
| Mixture of Monomers (Parts by Mass) | 100 | 100 | 100 |
| Photopolymerization Initiator (Parts by Mass) | 0.10 | 0.10 | 0.10 |
| HDDA (Parts by Mass) | 0.08 | 0.08 | 0.08 |
| Hollow Glass Balloon (Sample Name) | H-40 | H-35 | Z-27 |
| Hollow Glass Balloon (Parts by Mass) $\alpha$ | 12.5 | 12.5 | 9.5 |
| Fluorochemical Surfactant (Parts by Mass) | 0.70 | 0.70 | 0.70 |
| Additive Initiator (Parts by Mass) | 0.04 | 0.04 | 0.04 |
| Other Additives (Parts by Mass) | 0.7 | 0.7 | 0.7 |
| Total Combination Amount (Parts by Mass) $\beta$ | 114.12 | 114.12 | 111.12 |
| Volume Average Particle Size of Hollow Glass Balloons 2r [cm] | 4.0E-03 | 4.0E-03 | 6.3E-03 |
| Specific Gravity of Hollow Glass Balloon $\delta$ $[g/cm^3]$ | 0.42 | 0.36 | 0.27 |
| Number of Hollow Glass Balloons per Gram of Hollow Glass Balloons N | 7.11E+07 | 8.29E+07 | 2.83E+07 |
| Surface Area per Particle of Hollow Glass Balloon s $(cm^2]$ | 5.03E-05 | 5.03E-05 | 1 25E-04 |
| Total Surface Area of Particles contained per Gram of Hollow Glass Balloons $S_0[cm^2]$ | 3.57E+03 | 4.17E+03 | 3.53E+03 |
| Total Surface Area per Gram of Pressure-sensitive Adhesive Layer $[cm^2]$ | 3.91 E+02 | 4.56E+02 | 3.02E+02 |
| Shear Adhesive Force $[N/cm^2]$ | 88.7 | 90.0 | 74.0 |
| Modulus at 100% $[N/cm^2]$ | 14.5 | 14.5 | 12.7 |

Each sample produced in the pressure-sensitive adhesive layers in Examples 1 and 2 has a modulus at 100%

**EP 2 345 708 B1**

of 14.5 N/cm$^2$ as shown in Table 1. Accordingly, punching-out and cutting can be easily performed. In this case, a modulus at 100% has only to be greater than or equal to 13 N/cm$^2$. On the other hand, the sample produced in the pressure-sensitive adhesive layer in Comparative Example has a modulus at 100% of 12.7 N/cm$^2$ as shown in Table 1, which is lower than that in each Example. Accordingly, the pressure-sensitive adhesive layer in each Example has a higher modulus at 100% than that in Comparative Example, thereby allowing the pressure-sensitive adhesive layer to be preferably used in the applications in which high adhesion reliability is required, such as automobiles and buildings.

Subsequently, the present inventors have investigated the influence on the adhesive shear strength by the total surface area of the hollow inorganic fine particles contained in the pressure-sensitive adhesive layer. To do that, various pressure-sensitive adhesive layers were herein produced by changing the type and the combining amount of the hollow inorganic fine particles to be added in the pressure-sensitive adhesive composition. Properties (average particle size, specific gravity) of the hollow glass balloons added in each Example and Comparative Example and the total surface area of the added hollow glass balloons per gram of the pressure-sensitive adhesive layer, etc., are shown in Table 1.

(Shear Adhesive Force)

The thickness of each pressure-sensitive adhesive layer in Example 1, Example 2, and Comparative Example was adjusted to be 0.8 mm such that the pressure-sensitive adhesive layer was made to be a pressure-sensitive adhesive member whose both surfaces were protected with release liners. Then, a sample was produced by cutting each pressure-sensitive adhesive member into a specimen shape of 25 mm in length and 25 mm in width. After the release liner on one side of the cut sample was peeled off, the surface on the side was attached to the surface of a SUS plate by press-bonding while moving a roller having a weight of 5 kg weight in one direction, the surface of the SUS plate having been sanded with a 280-grit sandpaper and then wiped with toluene. Subsequently, after the release liner on the other surface of the sample was peeled off, the surface on the side was attached to the surface of another SUS plate in the same way as described above, so that a specimen was obtained. After the specimen was left at 23°C for 30 minutes, the force (shear adhesive force) necessary for peeling off the specimen in the shear direction was measured under the atmosphere of 23°c and 65% R. H. (tension speed: 50 mm/min). The results of measured values for each Example and Comparative Example are shown in Table 1.

From the investigation of the relationship between the total surface area of the hollow inorganic fine particles per gram of the pressure-sensitive adhesive layer in each Example and Comparative Example and the shear adhesive force, it is learned that, when the total surface area of the hollow inorganic fine articles per gram of the adhesive is greater than or equal to 3.5x10$^2$ [cm$^2$/g], sufficient shear adhesive force (shear strength) has been obtained. Also, when the shear adhesive force is greater than or equal to 80 N/cm$^2$ in the case, the pressure-sensitive adhesive member can be preferably used in the applications in which high adhesion reliability is required, such as automobiles and buildings, etc. In addition, it is better that the total surface area of the hollow inorganic fine particles per gram of the adhesive is smaller than or equal to $6.0 \times 10^2$ [cm$^2$] . With this, the adhesive area between the pressure-sensitive adhesive layer and the adherend can smoothly expand, thereby allowing good adhesive force to be obtained immediately after the press-bonding.

(Adhesive Force at Normal Temperature)

Samples were produced by cutting the pressure-sensitive adhesive layers in Examples and Comparative Example into the shape of 25 mm in width and 100 mm in length. A polyethylene terephthalate substrate having a thickness of 50 $\mu$m, in which a release treatment has not been performed, was attached to the adhesive surface of the obtained sample. Thereafter, the sample was attached to the surface of a SUS plate by press bonding while moving a roller having a weight of 5 kg weight in one direction, the surface of the SUS plate having been sanded with a 280-grit sandpaper and then wiped with toluene. After the sample was left at 23°C for 30 minutes, the force necessary for peeling off the sample was measured under the atmosphere of 23°c and 65% R. H. (peel angle: 180°, tension speed: 50 mm/min) . The peeling force in the sample produced with the pressure-sensitive adhesive layer in each Example was within the degree, which satisfies a desired performance in which a problem is not caused in practical use.

(Adhesive Force at High Temperature)

Samples were produced by cutting the pressure-sensitive adhesive layers in each Example and Comparative example into the shape of 25 mm in width and 100 mm in length. A polyethylene terephthalate substrate having a thickness of 50 $\mu$m, in which a release treatment has not been performed, was attached to the adhesive surface of the obtained sample. Thereafter, the sample was attached to the surface of a SUS plate by press bonding while moving a roller having a weight of 5 kg weight in one direction, the surface of the SUS plate having been sanded with a 280-grit

**14**

sandpaper and then wiped with toluene. After the sample was left at 23°C for one day and then in a high-temperature room at 80°C for 30 minutes, the adhesive force was measured with a tensile tester with a constant-temperature bath at 80°C (peel angle: 180°, tension speed: 50 mm/min). The peeling force in the sample produced with the pressure-sensitive adhesive layer in each Example was within the degree, which satisfies a desired performance in which a problem is not caused in practical use.

From the aforementioned results, when the total surface area of the hollow inorganic fine particles per gram of the pressure-sensitive adhesive layer is within a range of $3.5 \times 10^2$ to $6.0 \times 10^2$ [$cm^2$], it is learned that the shear adhesive force is significantly improved in each Example, while satisfying the desired adhesive force at normal temperature and high temperature.

The present invention has been described above based on the embodiments and examples. The embodiments are described for exemplary purposes only, and it can be readily understood by those skilled in the art that various modifications may be made by making various combinations of the aforementioned components or processes, which are also encompassed in the scope of the present invention.

## Claims

1. A pressure-sensitive adhesive tape having a pressure-sensitive adhesive layer containing hollow inorganic fine particles and bubbles, the pressure-sensitive adhesive tape having a modulus at 100% of 13.0 N/cm$^2$ or more and shear adhesive force of 80N/cm$^2$ or more and wherein the total surface area of the hollow inorganic fine particles per gram of the pressure-sensitive adhesive layer is within a range of $3.5 \times 10^2$ to $6.0 \times 10^2$ [$cm^2$].

2. The pressure-sensitive adhesive tape according to claim 1, wherein the hollow inorganic fine particles are hollow glass balloons.

3. The pressure-sensitive adhesive tape according to any one of claims 1-2, wherein the average particle size of the hollow inorganic fine particles is within a range of 20 to 80 $\mu$m.

4. The pressure-sensitive adhesive tape according to any one of claims 1-3, wherein the pressure-sensitive adhesive layer contains an acrylic polymer whose monomer main component is (meth)acrylic acid alkyl ester.

5. The pressure-sensitive adhesive tape according to claim 4, wherein the acrylic polymer is polymerized by the action of an active energy ray.

6. The pressure-sensitive adhesive tape according to any one of claims 1-5, wherein the total of the bubbles is contained in an amount of 5 to 40 percent by volume based on the total volume of the pressure-sensitive adhesive layer.

## Patentansprüche

1. Haftklebeband mit einer Haftkleberschicht, die hohle anorganische feine Teilchen und Blasen enthält, wobei das Haftklebeband einen Modul bei 100 % von 13,0 N/cm$^2$ oder mehr und eine Scherklebekraft von 80 N/cm$^2$ oder mehr aufweist und die Gesamtoberfläche der hohlen anorganischen feinen Teilchen pro Gramm der Haftkleberschicht in einem Bereich von 3,5 x 10$^2$ bis 6,0 x 10$^2$ [$cm^2$] liegt.

2. Haftklebeband nach Anspruch 1, wobei die hohlen anorganischen feinen Teilchen hohle Glasballons sind.

3. Haftklebeband nach einem der Ansprüche 1-2, wobei die mittlere Teilchengröße der hohlen anorganischen feinen Teilchen in einem Bereich von 20 bis 80 $\mu$m liegt.

4. Haftklebeband nach einem der Ansprüche 1-3, wobei die Haftkleberschicht ein Acrylpolymer enthält, dessen Monomerhauptkomponente (Meth)acrylsäurealkylester ist.

5. Haftklebeband nach Anspruch 4, wobei das Acrylpolymer durch die Wirkung eines aktiven Energiestrahls polymerisiert wird.

6. Haftklebeband nach einem der Ansprüche 1-5, wobei die Blasen insgesamt in einer Menge von 5 bis 40 Vol.-%, bezogen auf das Gesamtvolumen der Haftkleberschicht, enthalten sind.

**Revendications**

1. Ruban adhésif sensible à la pression ayant une couche adhésive sensible à la pression contenant de fines particules inorganiques creuses et des bulles, le ruban adhésif sensible à la pression ayant un module à 100 % de 13,0 N/cm$^2$ ou plus et une force adhésive en cisaillement de 80 N/cm$^2$ ou plus et où l'aire totale des fines particules inorganiques creuses par gramme de la couche adhésive sensible à la pression est dans une plage de 3,5 x 10$^2$ à 6,0 x 10$^2$ [cm$^2$].

2. Ruban adhésif sensible à la pression selon la revendication 1, où les fines particules inorganiques creuses sont des ballonnets en verre creux.

3. Ruban adhésif sensible à la pression selon l'une quelconque des revendications 1-2, où la taille de particule moyenne des fines particules inorganiques creuses est dans une plage de 20 à 80 μm.

4. Ruban adhésif sensible à la pression selon l'une quelconque des revendications 1-3, où la couche adhésive sensible à la pression contient un polymère acrylique dont le composant principal monomère est un alkylester d'acide (méth) acrylique.

5. Ruban adhésif sensible à la pression selon la revendication 4, où le polymère acrylique est polymérisé par l'action d'un rayonnement d'énergie active.

6. Ruban adhésif sensible à la pression selon l'une quelconque des revendications 1-5, où le total des bulles est contenu en une quantité de 5 à 40 % en volume sur la base du volume total de la couche adhésive sensible à la pression.

Fig. 1